# EUROPÄISCHE PATENTSCHRIFT

(11) **EP 2 773 923 B1**
(45) Veröffentlichungstag und Bekanntmachung des Hinweises auf die Patenterteilung: **30.03.2016**
(21) Anmeldenummer: 12795351.1
(22) Anmeldetag: 02.11.2012
(51) Int. Cl.: G01B 7/30, G05G 15/04, G01D 5/20

(54) **WINKELSENSOR AUF WIRBELSTROMBASIS**
EDDY CURRENT-BASED ANGLE SENSOR
CAPTEUR D'ANGLE À BASE DE COURANTS DE FOUCAULT

(30) Priorität: 03.11.2011 DE 102011085737
(43) Veröffentlichungstag der Anmeldung: 10.09.2014
(73) Patentinhaber: Continental Teves AG & Co. oHG, 60488 Frankfurt (DE)
(72) Erfinder: LEHMANN, Sören, 65934 Frankfurt (DE); MÜLLER, Hilmar, 35452 Heuchelheim (DE)
(86) Internationale Anmeldenummer: PCT/EP2012/071740
(87) Internationale Veröffentlichungsnummer: WO 2013/064646

(56) Entgegenhaltungen:
- EP-A1- 0 530 090
- DE-A1- 3 141 015
- DE-T2- 69 203 886
- NL-A- 8 201 178
- US-A- 4 752 732
- US-B1- 6 460 381

## Beschreibung

Die vorliegende Erfindung betrifft einen induktiven Winkelsensor nach Anspruch 1 und einen Signalgeber nach Anspruch 9.

Wirbelstromsensoren können, wie beispielsweise aus der DE 196 31 438 A1 bekannt, zur Abstandsbestimmung zwischen einem Messkörper und einer Spule herangezogen werden.

Induktive Winkelsensoren, die Wirbelstromsensoren einsetzen, sind beispielsweise aus der DE 10 2004 033 083 A1 bekannt. Der Wirbelstromsensor umfasst eine Spule zur Erzeugung von Wirbelströmen in einem leitfähigen Messkörper und den Messkörper selbst. Die Spule und der Messkörper können sich relativ zueinander in einer Bewegungsrichtung bewegen. Der Messkörper weist dabei eine leitfähige Spur auf, die derart gestaltet ist, dass sich die Induktivität der Spule beim Abtastem der Spur in Bewegungsrichtung kontinuierlich, das heißt periodisch ändert. Auf diese Weise können zeitkontinuierliche inkrementelle Winkelmessungen durchgeführt werden.

Es ist ferner aus der DE 10 2009 033 242 A1 bekannt, einen Drehwinkel-Index mittels Wirbelstromsensoren zu erfassen. Es ist Aufgabe der Erfindung, den Winkelsensor zu verbessern.

Die Aufgabe wird durch die Merkmale der unabhängigen Ansprüche gelöst. Bevorzugte Weiterbildungen der Erfindung sind Gegenstand der abhängigen Ansprüche.

Die Erfindung schlägt vor, die zur Spule gerichtete Oberfläche des Messkörpers derart auszubilden, dass sich innerhalb eines zu messenden Winkelbereiches beim Drehen des Messkörpers in eine vorbestimmte Richtung der Abstand zwischen der Oberfläche des Messkörpers und der Spule kontinuierlich ändert. Die zur Spule gerichtete Oberfläche am Messkörper umfasst dabei einen auf die Oberfläche des Messkörpers gelegten Weg, der in jeder Winkelposition des Messkörpers innerhalb des zu messenden Winkelbereiches den kürzesten Abstand vom Messkörper zur Spule aufweist (euklidischer Abstand).

Der Erfindung liegt die Erkenntnis zugrunde, dass für das Wirbelstrommessprinzip nicht der Messkörper an sich an eine Spule herangeführt werden braucht, um den Raum um die Spule herum in seinen elektro-magnetischen Eigenschaften zu verändern. Die Änderungen der elektro-magnetischen Eigenschaften des Raumes können bereits durch unterschiedliche Orientierungen des Messkörpers zur Spule herbeigeführt werden, wenn dieser in den jeweils unterschiedlichen Orientierungen unterschiedlich ausgebildet ist.

Basierend darauf liegt der Erfindung die Idee zugrunde das Wirbelstromprinzip zur Bereitstellung eines Absolutwertgebers für Winkelmessungen heranzuziehen. Dies wird dadurch erreicht, dass die Oberfläche des Messkörpers innerhalb des Winkelmessbereichs in jeder Winkelposition einen verschiedenen Abstand von der Spule aufweist, so dass jeder Winkelposition ein eindeutiger Abstand zwischen Spule und Messkörperoberfläche zugeordnet werden kann. Auf diese Weise kann mit einer Schaltung zur messtechnischen Auswertung des Abstandes jede Winkelposition des Messkörpers und damit eines mit dem Messkörper verbundenen Messobjektes, wie beispielsweise das Gaspedal eines Fahrzeuges eindeutig erfasst werden.

Die Erfindung gibt daher einen induktiver Winkelsensor an, der einen Messkörper, der innerhalb eines Winkelmessbereichs in verschiedenen Winkelpositionen um eine Rotationsachse positionierbar ist, und eine vom Messkörper beabstandete Spule umfasst. Erfindungsgemäß weist die Oberfläche des Messkörpers innerhalb des Winkelmessbereichs in jeder Winkelposition einen verschiedenen Abstand von der Spule auf.

Durch die Erfindung lässt sich das Wirbelstrommessprinzip zur absoluten Winkelerfassung eines Messobjektes heranziehen. Derartige Wirbelstromsensoren sind kostengünstig, präzise und beständig.

In einer Weiterbildung der Erfindung ist der von der Winkelposition abhängige Abstand der Oberfläche des Messkörpers von der Spule im Winkelmessbereich monoton. Damit steigt beziehungsweise sinkt der Abstand der Oberfläche des Messkörpers von der Spule kontinuierlich, wenn der Messkörper im Winkelmessbereich konstant in eine bestimmte Richtung gedreht wird. Dadurch lässt sich die Auswertung des erfassten Abstandes besonders einfach gestalten.

In einer zusätzlichen oder alternativen Weiterbildung der Erfindung ist die Spule von der Rotationsachse aus gesehen axial vom Messkörper beabstandet positioniert. Durch axiale Positionierung lässt sich die Oberfläche des Messkörpers erfindungsgemäß in besonders einfacher Weise ausgestalten, indem sie beispielsweise an einer Stirnseite einfach abgeschrägt wird.

In einer anderen Weiterbildung der Erfindung ist die Spule von der Rotationsachse aus gesehen radial vom Messkörper beabstandet positioniert. Die radiale Positionierung hat den Vorteil, dass die meist größeren axialen Toleranzen oder Spiele bei der Erfassung eines Drehwinkels des Messkörpers vollständig ausgeblendet werden können.

In einer zusätzlichen Weiterbildung der Erfindung umfasst der Winkelsensor eine weitere Spule, die von der Rotationsachse aus gesehen axial vom Messkörper beabstandet positioniert ist, wenn die erste Spule radial vom Messkörper beabstandet positioniert ist, oder die von der Rotationsachse aus gesehen radial vom Messkörper beabstandet positioniert ist, wenn die erste Spule axial vom Messkörper beabstandet positioniert ist. Durch die weitere Spule kann Redundanz geschaffen werden, mit der die Messergebnisse der ersten Spule plausibilisiert werden können, um beispielsweise festzustellen, ob die erste Spule innerhalb des Winkelsensors noch korrekt ausgerichtet ist.

In einer noch anderen Weiterbildung der Erfindung kann der Messkörper aus einem Material mit elektrisch leitfähigen und/oder ferromagnetischen Eigenschaften hergestellt sein. Bei der Verwendung von Materialien mit elektrisch leitfähigen Eigenschaften, wie beispielsweise Aluminium oder Kupfer, wird die Induktivität der Spule durch Wirbelströme verändert. Bei der Verwendung von Materialien mit ferromagnetischen Eigenschaften, wie beispielsweise Weicheisen, wird die Induktivität der Spule durch die Veränderung ihrer magnetischen Eigenschaften verändert.

In einer Weiterbildung der Erfindung ist die Spule eine Planarspule. Durch die Planarspule kann der Winkelsensor weiter verkleinert werden, da die Planarspule beispielsweise flach auf eine Gehäusewand des Winkelsensors aufgesetzt werden kann, ohne in den Innenraum dieses Gehäuses hineinzuragen und Platz einzunehmen.

In einer zusätzlichen Weiterbildung der Erfindung ist die Planarspule aus Leiterbahnen einer mit der Planarspule elektrisch verbundenen Schaltung zum Erfassen der Induktivität und zum Ausgeben eines von der Induktivität der Planarspule abhängigen Signals gebildet. Auf diese Weise kann die Planarspule direkt auf die Schaltung durch reine Ausbildung der Leiterbahnen aufgebracht werden. Auf diese Weise entfällt eine extra Spule für den Winkelsensor, was die Größe des Winkelsensors weiter reduziert. Zudem lassen sich Produktions- und Materialkosten sparen, da weder eine extra Spule angeschafft noch in einem extra Herstellungsschritt auf die Schaltung aufgebracht werden muss.

In einer anderen Weiterbildung der Erfindung ist eine Isolierung zwischen der Spule und dem Messkörper angeordnet. Diese Isolierung verhindert einen Kurzschluss der Elemente des Winkelsensors und damit undefinierte Messzustände.

Die Erfindung gibt auch einen Signalgeber für ein Kraftfahrzeug an, das ein eine Welle drehendes Steuerungselement und einen erfindungsgemäßen induktiven Winkelsensor zum Erfassen der Winkellage des Steuerungselements umfasst.

In einer besonderen Ausbildung der Erfindung ist das Steuerungselement ein Fahrpedal.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 ein erstes Ausführungsbeispiel für einen erfindungsgemäßen Winkelsensor in einer perspektiven Ansicht,
Fig. 2 das erste Ausführungsbeispiel für den erfindungsgemäßen Winkelsensor in einer perspektiven Ansicht,
Fig. 3 das erste Ausführungsbeispiel für den erfindungsgemäßen Winkelsensor in einer Schnittansicht,
Fig. 4 ein zweites Ausführungsbeispiel für den erfindungsgemäßen Winkelsensor in einer Schnittansicht, und
Fig. 5 eine beispielhafte Schaltung zur Auswertung der Messergebnisse des erfindungsgemäßen induktiven Wegesensors zeigen.

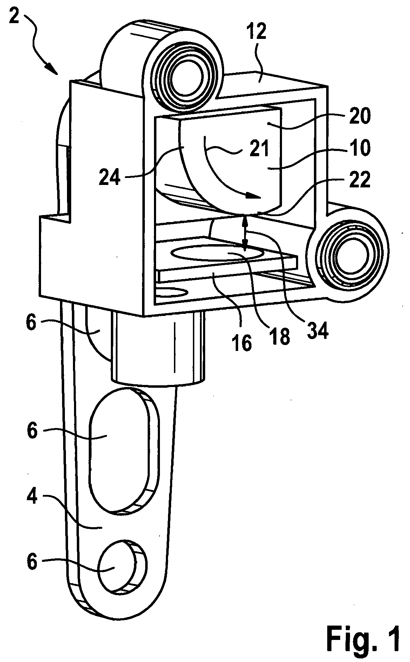

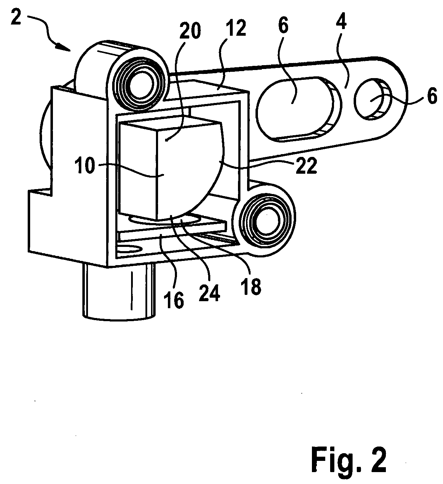

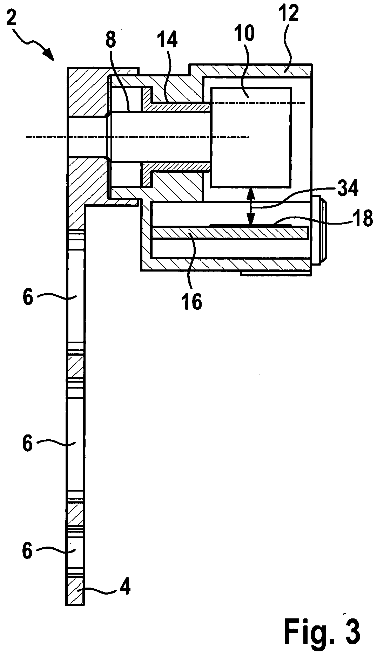

Es wird auf die Fig. 1 bis 3 Bezug genommen, die ein erstes Ausführungsbeispiel für einen erfindungsgemäßen Winkelsensor 2 zeigen.

Der Winkelsensor 2 weist einen Hebel 4 mit Bohrungen 6 auf, der schwenkbar um eine Welle 8 gelagert ist. An der dem Hebel 4 gegenüberliegenden Seite der Welle 8 ist ein Messkörper 10 in einem Gehäuse 12 angeordnet, auf den an späterer Stelle näher beschrieben wird. Die Welle durchdringt das Gehäuse 12 in einer Lagerung 14. In die Zeichnungsebene hinein betrachtet ist radial unter dem Messkörper 10 an der unteren Seite des Gehäuses 12 eine Leiterplatte 16 ausgebildet, auf der eine Planarspule 18 getragen ist.

Der Messkörper 10 weist die Form einer geviertelten Ellipse auf, wobei die Welle 8 im Wesentlichen am Mittelpunkt 20 der Ellipse angreift. Wird die Welle 8 um den Mittelpunkt 20 in der in Fig. 1 gezeigten Richtung 21 gedreht, so wird der Nebenscheitel 22 der Ellipse in die Richtung 21 in die Zeichnungsebene hinein betrachtet nach oben und der Hautscheitel 24 in die Zeichnungsebene hinein betrachtet nach unten gedreht. Da der Hauptscheitel 24 bekanntermaßen einen größeren radialen Abstand von Mittelpunkt der Ellipse aufweist, als der Nebenscheitel 22, wird durch die Drehung in die Richtung 21 die Oberfläche des Messkörpers 10 auf die unter dem Messkörper 10 angeordnete Planarspule 18 zubewegt.

Die elliptische Form des Messkörpers 10 ist nur als Beispiel gewählt. Erfindungsgemäß ist jede Form geeignet, die in Abhängigkeit des Drehwinkels des Hebels 4 und damit des Messkörpers 10 die Oberfläche des Messkörpers 10 an die Planarspule 18 heranführt.

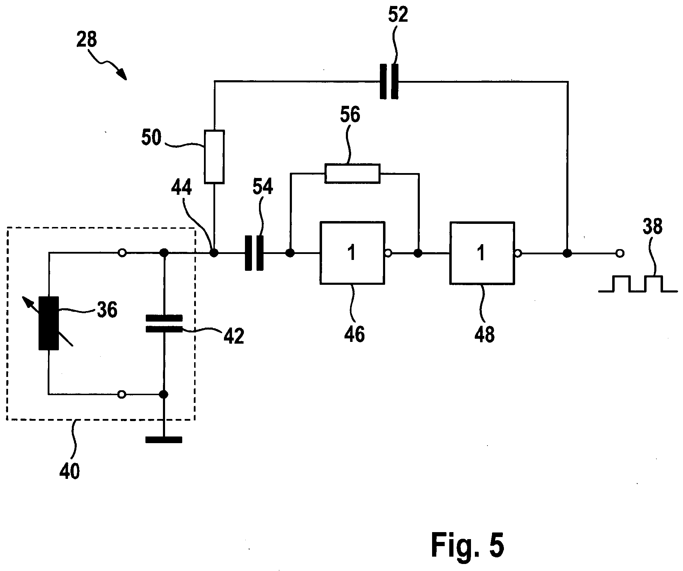

Die Planarspule 18 ist aus mehreren Leiterbahnen auf der Leiterplatte 16 gebildet, die eine in Fig. 5 gezeigte beispielhafte Schaltung 26 zur Auswertung der Induktivität der Planarspule 18 aufweist.

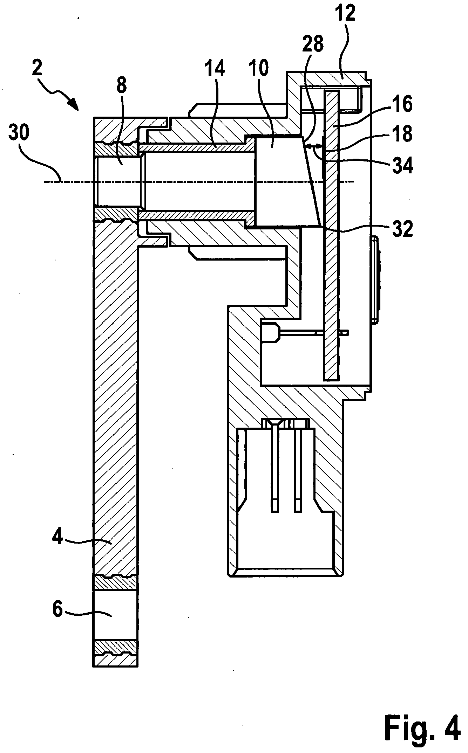

Es wird auf Fig. 4 Bezug genommen, die ein zweites Ausführungsbeispiel für einen erfindungsgemäßen Winkelsensor 2 zeigt. In Fig. 4 werden zu den Fig. 1 bis 3 gleiche Elemente mit gleichen Bezugszeichen versehen und nicht noch einmal beschrieben.

In Fig. 4 ist der Messkörper 10 an seiner der Welle 8 gegenüberliegenden axialen Endseite 28 zur Rotationsachse 30 der Welle 8 hin abgeschrägt. Axial neben der axialen Endseite 28 des Messkörpers 10 ist die Planarspule 18 auf der Leiterplatte 16 an der von der Rotationsachse 30 aus gesehenen und in die Zeichnungsebene hinein betrachteten radialen Oberseite der Welle 8 angeordnet. Durch Drehen des Hebels 4 und damit des Messkörpers 10 wird eine Kante 32 an der axialen Endseite 28 des Messkörpers von der von der Rotationsachse 30 aus gesehenen und in die Zeichnungsebene hinein betrachteten radialen Unterseite der Welle 8 in die radiale Oberseite der Welle 8 gedreht, so dass wie im ersten Ausführungsbeispiel der Fig. 1 bis 3 die Oberfläche des Messkörpers 10 an die Planarspule 18 heranführt wird.

Durch das Heranführen der Oberfläche des Messkörpers 10 an die Planarspule 18 wird ein Abstand 34 zwischen der Planarspule 18 und der Oberfläche des Messkörpers 10 verkleinert. Dieser Abstand 34 kann vergrößert werden, wenn der Messkörper entgegen der in Fig. 1 gezeigten Richtung 21 gedreht wird. In Abhängigkeit des Abstandes 34 ändert sich die Induktivität 36 der Planarspule 18. Die Induktivität 36 kann mit der Schaltungen 28 erfasst und ausgewertet werden.

Es wird auf Fig. 5 Bezug genommen, die ein beispielhaftes Schaltbild der Schaltung 28 zeigt.

In der vorliegenden Ausführung ist die Schaltung 28 als LC-Gate-Oszillator ausgeführt. Dieser erzeugt basierend auf der Induktivität 36 der Planarspule 18 ein Ausgangssignal 38 mit einer von der Induktivität 36 abhängigen Frequenz über einen Parallelschwinkreis 40. Alternativ könnte die Induktivität mit anderen Oszillatoren, wie einem Meissner Oszillator, oder mit anderen Messprinzipien, wie beispielsweise eine Erfassung der Impedanz der Planarspule 18, bestimmt werden.

Der Parallelschwingkreis 40 in der gezeigten Schaltung 28 ist aus der Induktivität 36 der Planarspule 18 und einer Kapazität 42 zusammengesetzt. Die für einen Oszillator notwendige Verstärkung der erzeugte Schwingung 44 des Parallelschwingkreis 40 wird über einen ersten Inverter 46 und einen zweiten Inverter 48 realisiert. Die notwendige Rückkopplung auf den Parallelschwingkreis 40 erfolgt über einen Rückkopplungswiderstand 50 und eine Rückkopplungskapazität 52. Dabei bestimmt der Rückkopplungswiderstand 50 die Amplitude des Ausgangssignals 38 und somit die Leistungsaufnahme der Schaltung 28. Eine Filterkapazität 54 zwischen dem Parallelschwingkreis 40 und dem ersten Inverter 46 filtert Signalanteile mit tiefen Frequenzen, wie beispielsweise einen Offset. Der erste Inverter 46 bildet ferner mit einem weiteren Rückkopplungswiderstand 56 eine untergeordnete Rückkoppelschleife.

## Patentansprüche

1. Induktiver Winkelsensor (2) umfassend einen Messkörper (10), der innerhalb eines Winkelmessbereichs in verschiedenen Winkelpositionen um eine Rotationsachse (32) positionierbar ist und eine vom Messkörper (10) beabstandete Spule (18), wobei die Oberfläche des Messkörpers (10) innerhalb des Winkelmessbereichs in jeder Winkelposition einen verschiedenen Abstand (34) von der Spule (18) aufweist, **dadurch gekennzeichnet, dass**
der induktive Winkelsensor eine Schaltung (28) umfasst, welche als LC-Gate-Oszillator ausgeführt ist, wobei dieser basierend auf der Induktivität (36) einer als Planarspule (18) ausgebildeten Spule ein Ausgangssignal (38) mit einer von der Induktivität (36) abhängigen Frequenz über einen Parallelschwingkreis (40) erzeugt.

2. Induktiver Winkelsensor (2) nach Anspruch 1, wobei der von der Winkelposition abhängige Abstand (34) der Oberfläche des Messkörpers (10) von der Spule (18) im Winkelmessbereich monoton ist.

3. Induktiver Winkelsensor (2) nach Anspruch 1 oder 2, wobei die Spule (18) von der Rotationsachse (32) aus gesehen radial und/oder axial vom Messkörper (10) beabstandet positioniert ist.

4. Induktiver Winkelsensor (2) nach Anspruch 3, umfassend eine weitere Spule, die entsprechend von der Rotationsachse (32) aus gesehen axial oder radial vom Messkörper (10) beabstandet positioniert ist.

5. Induktiver Winkelsensor (2) nach einem der vorstehenden Ansprüche, wobei der Messkörper (10) elektrisch leitfähig und/oder ferromagnetisch ist.

6. Induktiver Winkelsensor (2) nach Anspruch 1, wobei die Spule (18) eine Planarspule ist.

7. Induktiver Winkelsensor (2) nach Anspruch 6, wobei die Planarspule (18) aus Leiterbahnen einer mit der Planarspule (18) elektrisch verbundenen Schaltung (28) zum Erfassen der Induktivität (36) und zum Ausgeben eines von der Induktivität (36) der Planarspule (18) abhängigen Signals (38) gebildet ist.

8. Induktiver Winkelsensor (2) nach einem der vorstehenden Ansprüche, umfassend eine Isolierung zwischen der Spule (18) und dem Messkörper (10).

9. Signalgeber für ein Kraftfahrzeug umfassend ein eine Welle (8) drehendes Steuerungselement (4) und einen induktiven Winkelsensor (2) nach einem vorstehenden Ansprüche zum Erfassen der Winkellage des Steuerungselements (4).

10. Signalgeber nach Anspruch 9, wobei das Steuerungselement ein Fahrpedal ist.

## Claims

1. Inductive angle sensor (2) comprising a measuring body (10), which can be positioned about an axis of rotation (30) inside an angle measuring range in different angular positions, and a coil (18) that is at a distance from the measuring body (10), wherein the surface of the measuring body (10) is at a different distance (34) from the coil (18) in each angular position within the angle measuring range, **characterized in that** the inductive angle sensor comprises a circuit (28) embodied as an LC gate oscillator, wherein the latter, on the basis of the inductance (36) of a coil designed as a planar coil (18), generates an output signal (38) having a frequency dependent on the inductance (36) by means of a parallel resonant circuit (40).

2. Inductive angle sensor (2) according to Claim 1, wherein the distance (34) that is between the surface of the measuring body (10) and the coil (18) and is monotonically dependent upon the angular position is in the angle measuring range.

3. Inductive angle sensor (2) according to Claim 1 or 2, wherein the coil (18) is positioned at a distance from the measuring body (10) in a radial and/or axial manner when viewed from the axis of rotation (30).

4. Inductive angle sensor (2) according to Claim 3, comprising an additional coil that is positioned at a distance from the measuring body (10) in an axial or radial manner when viewed accordingly from the axis of rotation (32).

5. Inductive angle sensor (2) according to any one of the preceding claims, wherein the measuring body (10) is electrically conductive and/or ferromagnetic.

6. Inductive angle sensor (2) according to Claim 1, wherein the coil (18) is a planar coil.

7. Inductive angle sensor (2) according to Claim 6, wherein the planar coil (18) is formed from conductor tracks of a circuit (28) that is electrically connected to the planar coil (18) for the purpose of ascertaining the inductance (36) and for the purpose of outputting a signal (38) that is dependent upon the inductance (36) of the planar coil (18).

8. Inductive angle sensor (2) according to any one of the preceding claims, comprising insulation between the coil (18) and the measuring body (10).

9. Signal transmitter for a motor vehicle comprising a control element (4), which rotates a shaft (8), and an inductive angle sensor (2) according to any one of the preceding claims for ascertaining the angular position of the control element (4).

10. Signal transmitter according to Claim 9, wherein the control element is a drive pedal.

## Revendications

1. Capteur d'angle inductif (2) comprenant un corps de mesure (10) susceptible d'être positionné dans différentes positions angulaires autour d'un axe de rotation (32) dans une plage de mesure d'angle, et une bobine (18) espacée du corps de mesure (10), la surface du corps de mesure (10) se trouvant à une distance (34) différente de la bobine (18) dans chaque position angulaire dans la plage de mesure d'angle ; **caractérisé en ce que**
le capteur d'angle inductif comprend un circuit électrique (28) conçu comme un oscillateur LC, celui-ci produisant un signal de sortie (38) avec une fréquence dépendante de l'inductivité (36), par le biais d'un circuit oscillant parallèle (40), sur la base de l'inductivité (36) d'une bobine formée comme une bobine planaire (18).

2. Capteur d'angle inductif (2) selon la revendication 1, dans lequel la distance (34) dépendant de la position angulaire, entre la surface du corps de mesure (10) et la bobine (18) est monotone dans la plage de mesure d'angle.

3. Capteur d'angle inductif (2) selon la revendication 1 ou 2, dans lequel la bobine (18) est positionnée radialement et/ou axialement à distance du corps de mesure (10), du point de vue de l'axe de rotation (32).

4. Capteur d'angle inductif (2) selon la revendication 3, comprenant une autre bobine positionnée axialement ou radialement à distance du corps de mesure (10) de façon correspondante du point de vue de l'axe de rotation (32).

5. Capteur d'angle inductif (2) selon l'une des revendications précédentes, dans lequel le corps de mesure (10) est électriquement conducteur et/ou ferromagnétique.

6. Capteur d'angle inductif (2) selon la revendication 1, dans lequel la bobine (18) est une bobine planaire.

7. Capteur d'angle inductif (2) selon la revendication 6, dans lequel la bobine planaire (18) est constituée de pistes conductrices d'un circuit (28) électriquement raccordé à la bobine planaire (18), pour la détection de l'inductivité (36) et pour l'émission d'un signal (38) dépendant de l'inductivité (36) de la bobine planaire (18).

8. Capteur d'angle inductif (2) selon l'une des revendications précédentes, comprenant une isolation entre la bobine (18) et le corps de mesure (10).

9. Émetteur de signaux pour un véhicule automobile, comprenant un élément de commande (4) faisant tourner un arbre (8), et un capteur d'angle inductif (2) selon l'une des revendications précédentes, pour la détection de la position angulaire de l'élément de commande (4).

10. Émetteur de signaux selon la revendication 9, dans lequel l'élément de commande est une pédale d'accélérateur.
